(19) Europäisches Patentamt
European Patent Office
Office européen des brevets

(11) EP 2 330 694 A2

(12) EUROPEAN PATENT APPLICATION

(43) Date of publication:
08.06.2011 Bulletin 2011/23

(51) Int Cl.:
*H01R 25/14* (2006.01)

(21) Application number: 10193249.9

(22) Date of filing: 01.12.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 03.12.2009 FI 20096282
10.12.2009 FI 20096304

(71) Applicant: Nordic Aluminium Oyj
02490 Pikkala (FI)

(72) Inventor: Nieminen, Eero
02660 Espoo (FI)

(74) Representative: Valkeiskangas, Tapio Lassi
Paavali
Kolster OY AB
P.O. Box 148
(Iso Roobertinkatu 23)
00121 Helsinki (FI)

(54) **Power take-off adapter for conductor track**

(57)     A power take-off adapter for a conductor track, the conductor track (20) comprising a coupling slot (28) and a plurality of phase conductors (L1, L2, L3) extending longitudinally in the coupling slot, the power take-off adapter being arranged to be connected electrically and mechanically to the conductor track (20) and comprising a frame part (2), a phase-contact finger (4) arranged to protrude from the frame part (2) to form an electrically conductive connection to a phase conductor (L2) of the conductor track (20), a coupling contact (6) arranged to lead current to an electric appliance supplied by the power take-off adapter, and a connection contact member arranged to lead current from the phase-contact finger (4) to the coupling contact (6). The connection contact member comprises a helical spring (8), the connection contact member being arranged in such a manner that, in use, the entire load current flowing from the phase-contact finger (4) to the coupling contact (6) flows via the helical spring (8). The frame part (2) comprises a proximal location (41) for the phase-contact finger and a distal location (42) for the phase-contact finger, both of which are arranged to receive the phase-contact finger (4), the phase-contact finger (4) being arranged to be moved between the proximal location (41) for the phase-contact finger and the distal location (42) for the phase-contact finger, the helical spring (8) being arranged such that it is able to apply an axial force to the phase-contact finger (4) both when the phase-contact finger is in its proximal location (41) and when it is in its distal location (42).

Fig. 4

## Description

## Background of the invention

The invention relates to a power take-off adapter for a conductor track, as claimed in the preamble of independent claim 1.

Conductor track systems have long been used in the field, and many types of power take-off adapters for conductor track systems are known. Publication FI 84305 discloses a known power take-off adapter for a conductor track. The problem of the power take-off adapter of this publication is the complexity of the structure, due to which the manufacturing costs are high.

## Brief description of the invention

It is an object of the invention to provide a simple-structured power take-off adapter for a conductor track in such a manner that the manufacturing costs for the power take-off adapter will be lower than before. The object of the invention is achieved by a power take-off adapter which is characterized by what is disclosed in independent claim 1. The preferred embodiments of the invention are disclosed in the dependent claims.

The invention is based on the idea that a connection contact member of the power take-off adapter, which is arranged to lead current from a phase-contact finger to a coupling contact, comprises a helical spring, via which the entire load current of the power take-off adapter flows during use.

An advantage of the power take-off adapter of the invention is its simplicity. Another advantage is that the simple structure leads to savings in the manufacturing costs.

## Brief description of the figures

The invention will be described in greater detail in connection with the preferred embodiments and with reference to the accompanying drawings, in which:

Figure 1 shows a power take-off adapter according to an embodiment of the invention;
Figure 2 shows a side view of the power take-off adapter of Figure 1 from one direction;
Figure 3 shows a side view of the power take-off adapter of Figure 1 from another direction;
Figure 4 is a cross section of the power take-off adapter of Figure 2 taken along line B - B;
Figure 5 shows a helical spring of a connection contact member from the axial direction;
Figure 6 shows the helical spring of Figure 5 obliquely from above;
Figure 7 shows a cross section of an end turn of the helical spring of Figure 5 close to the free end in the circumferential direction;

Figure 8 shows a conductor track from a longitudinal end; and
Figure 9 shows how the power take-off adapter of Figure 1 is mounted in the conductor track.

## Detailed description of the invention

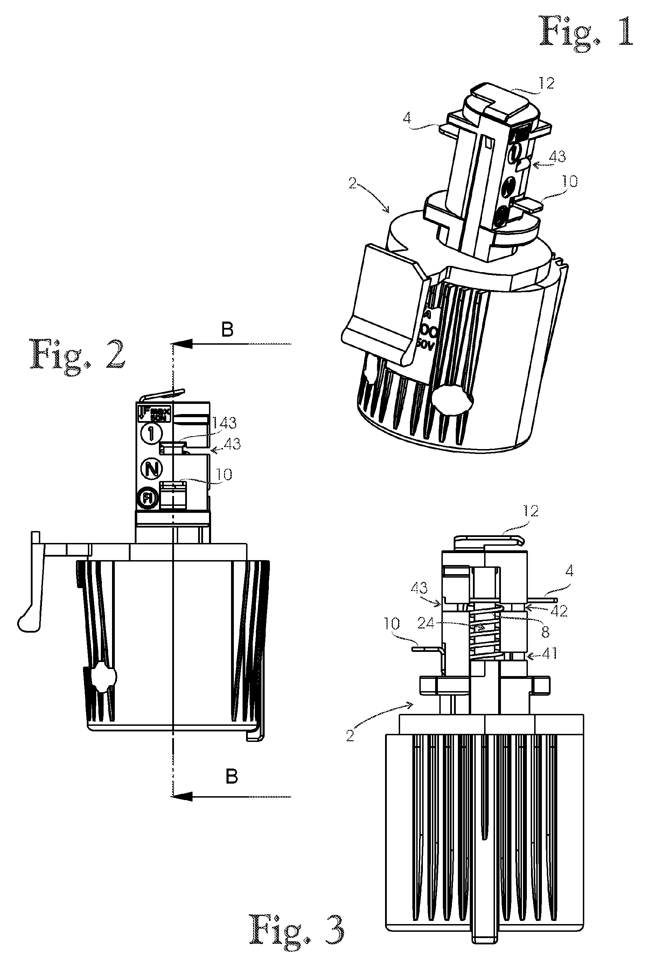

Figure 1 shows a power take-off adapter according to an embodiment of the invention obliquely from above. The power take-off adapter comprises a frame part 2 and a phase-contact finger 4 protruding from the frame part 2 and arranged to form a conductive connection to a phase conductor of a conductor track. The power take-off adapter also comprises a neutral contact finger 10 and a ground connector 12, both of which protrude from the frame part 2.

Figure 2 shows the power take-off adapter of Figure 1 directly from the side. Figure 3 also shows a side view of the power take-off adapter of Figure 1, but from a direction perpendicular to the viewing direction of Figure 2.

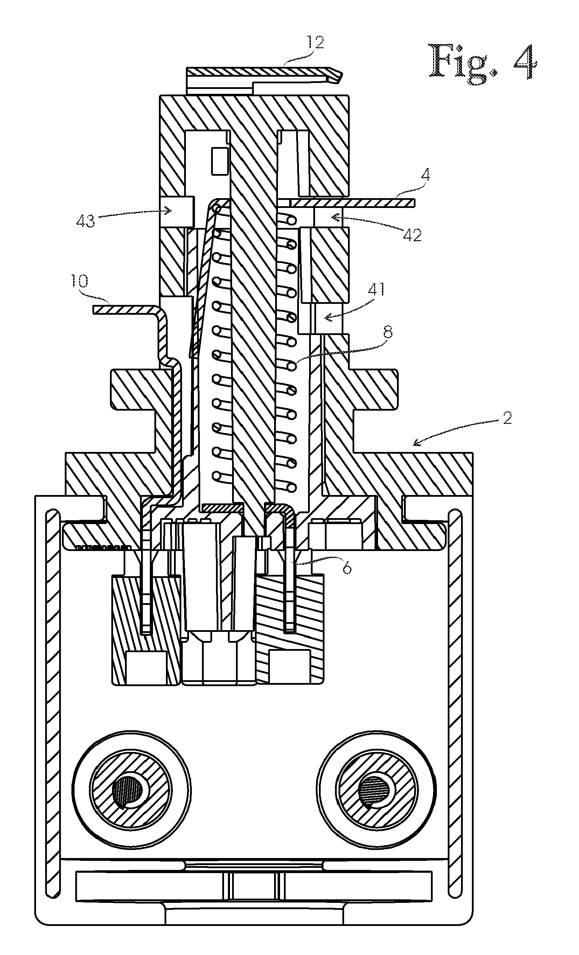

The inner structure of the power take-off adapter is illustrated in Figure 4, which shows a cross section of the power take-off adapter of Figure 2 along line B - B. Figure 4 shows that there is a coupling contact 6 and a connection contact member with a helical spring 8 inside the frame part 2. The connection contact member is arranged to lead current from the phase-contact finger 4 to the coupling contact 6. The coupling contact 6, for its part, is arranged to lead current to an electric appliance supplied by the power take-off adapter. The coupling contact 6 is a power connector, which may be formed as a slot connector. The coupling contact 6 is arranged to be connected to the electric appliance supplied by the power take-off adapter by means of a connecting conductor. The figures do not show the electric appliance supplied by the power take-off adapter or the connecting conductor. The connection contact member is arranged in such a manner that, in use, the entire load current of the electric appliance flowing from the phase-contact finger 4 to the coupling contact 6 flows via the helical spring 8.

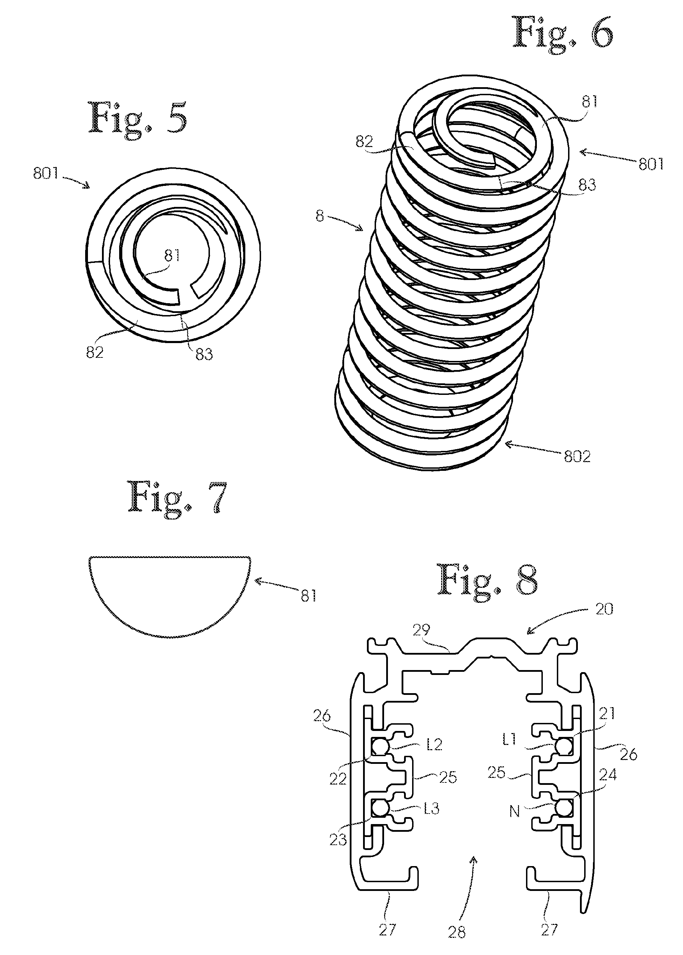

The helical spring 8 comprises a first axial end and a second axial end. Figure 5 shows the helical spring 8 directly from the direction of the first axial end 801. Figure 6, for its part, illustrates the helical spring 8 obliquely from above, showing both the first axial end 801 and the second axial end 802. The outermost turn of the helical spring 8 at the first axial end 801 is an end turn 81. A turn of the helical spring 8 refers herein to a part of the helical spring 8 that extends 360° in the circumferential direction of the helical spring. The axial direction of the helical spring 8 refers herein to the longitudinal direction of the helical spring, i.e. the direction substantially perpendicular to the plane defined by each turn of the helical spring 8.

A spring turn adjacent to the end turn 81 of the helical spring 8 is marked with reference numeral 82. The boundary line between the end turn 81 and the turn 82 adjacent to the end turn is marked with broken line 83. The spring turn 82 adjacent to the end turn 81 comprises an overlapping section, which overlaps the end turn 81 in such a manner that, in use, the end surface of the overlapping section is arranged to be on the same plane as the end surface of the end turn 81, whereby the end surface of the overlapping section of the adjacent spring turn 82 is able to act as a conductive contact surface together with the end surface of the end turn 81.

The end turn 81 at the first axial end 801 of the helical spring 8 and the overlapping section of the spring turn 82 adjacent to this end turn are arranged to be in conductive contact with the phase-contact finger 4. The overlapping section at the first axial end 801 increases the contact surface area between the helical spring 8 and the phase-contact finger 4, thus reducing the electric resistance between the helical spring 8 and the phase-contact finger 4.

The end surface of the first axial end 801 of the helical spring 8 is levelled to increase the conductive contact surface. The end surface of the first axial end 801 comprises the end surface of the end turn 81 and the end surface of the overlapping section of the turn 82 adjacent to the end turn. In other words, both the end surface of the end turn 81 and the end surface of the overlapping section of the turn 82 adjacent to the end turn are levelled.

Figure 7 shows a cross section of the end turn 81 of the helical spring 8 close to the free end in the circumferential direction. Figure 7 shows that the cross section has a shape of a circular segment, the central angle of which is substantially as large as $\pi$ radians, making the contact surface area as large as possible. In an alternative embodiment, the central angle of the circular segment may be larger than $\pi$, such as $\dfrac{2}{3}\pi$ , in which

case the contact surface area is a bit smaller, but the spring force pressing the phase-contact finger towards the end surface of the axial end slightly greater, making the electric contact more reliable. The selection of the central angle of the circular segment is thus a compromise between the contact surface area and the spring force. The cross section of the end turn of the helical spring may have a shape of a circular segment along the entire length of the end turn.

The second axial end 802 of the helical spring 8 is similar to the first axial end 801. Thus, the spring turn adjacent to the end turn of the second axial end 802 comprises an overlapping section, and the end surface of the second axial end 802 is levelled. The end surface of the second axial end 802 of the helical spring 8 is arranged to be in conductive contact with the coupling contact 6. Thus, the overlapping section of the spring turn adjacent to the end turn of the second axial end 802 and the levelled end surface of the second axial end 802 reduce the electric resistance between the helical spring 8 and the coupling contact 6.

The section of the phase-contact finger 4 that is in conductive connection with the first axial end 801 of the helical spring 8 is a planar section. Similarly, the section of the coupling contact 6 that is in conductive connection with the second axial end 802 of the helical spring 8 is a planar section.

In the middle part of the helical spring 8, between the first axial end 801 and the second axial end 802, the cross section of the helical spring 8 is substantially circular. In an alternative embodiment, the cross section of the middle part of the helical spring may have a shape of an ellipse or a right-angled parallelogram, for instance.

The helical spring 8 is made of tin bronze CuSn6. In alternative embodiments it is also possible to use other materials, the properties of which are a suitable compromise between conductivity, spring force and manufacturing costs.

In accordance with Figure 3, the frame part 2 of the power take-off adapter comprises a proximal location 41 for the phase-contact finger and a distal location 42 for the phase-contact finger, both of which are arranged to receive the phase-contact finger 4. The phase-contact finger 4 is arranged to be moved manually between the proximal location 41 for the phase-contact finger and the distal location 42 for the phase-contact finger. The proximal location 41 and the distal location 42 for the phase-contact finger are situated separately from one another in the axial direction of the frame part 2 so that the proximal location 41 for the phase-contact finger is closer to the coupling contact 6 than the distal location 42 for the phase-contact finger. The axial direction of the frame part 2 is the same as the axial direction of the helical spring 8 and is thus the vertical direction in Figures 2, 3 and 4.

When the phase-contact finger 4 is in its proximal location 41, the phase-contact finger 4 is arranged to be connected to a phase conductor of the conductor track, and when the phase-contact finger 4 is in its distal location 42, the phase-contact finger 4 is arranged to be connected to another phase conductor of the conductor track. The helical spring 8 is arranged such that it can apply an axial force to the phase-contact finger 4 both when the phase-contact finger is in its proximal location 41 and when it is in its distal location 42, the axial force being arranged to ensure a reliable conductive connection at both the first axial end 801 and second axial end 802 of the helical spring 8.

Figures 1 to 4 show that the power take-off adapter also comprises a second distal location 43 for the phase-contact finger, which is also arranged to receive the phase-contact finger 4. The phase-contact finger 4 is arranged to be moved manually between all three locations 41, 42 and 43 for the phase-contact finger. The second distal location 43 for the phase-contact finger is, in the axial direction of the frame part 2, on the same level as the distal location 42 for the phase-contact finger. The second distal location 43 for the phase-contact finger is provided at the frame part 2 in such a manner that, when the phase-contact finger 4 is received in its second distal location 43, the phase-contact finger 4 protrudes from the frame 2 in a direction opposite to the direction, in which the phase-contact finger 4 protrudes when it is in its proximal location 41 or its distal location 42. In other words, the proximal location 41 for the phase-contact finger and the second distal location 43 for the phase-contact finger are 180° away from one another. Similarly, the distal location 42 for the phase-contact finger and the second distal location 43 for the phase-contact finger are 180° away from one another. Thus, the phase-contact finger 4 is arranged to be turned 180° with respect to the axial direction of the frame part 2.

The second distal location 43 for the phase-contact finger is on the same side of the frame part 2 as the neutral contact finger 10 so that, in its second distal location 43, the phase-contact finger 4 protrudes from the frame part 2 in the same direction as the neutral contact finger 10. The second distal location 43 for the phase-contact finger is, in the axial direction of the frame part 2, separate from the neutral contact finger 10 so that the second distal location 43 for the phase-contact finger is closer to the first end of the frame part 2, from which the ground connector 12 protrudes.

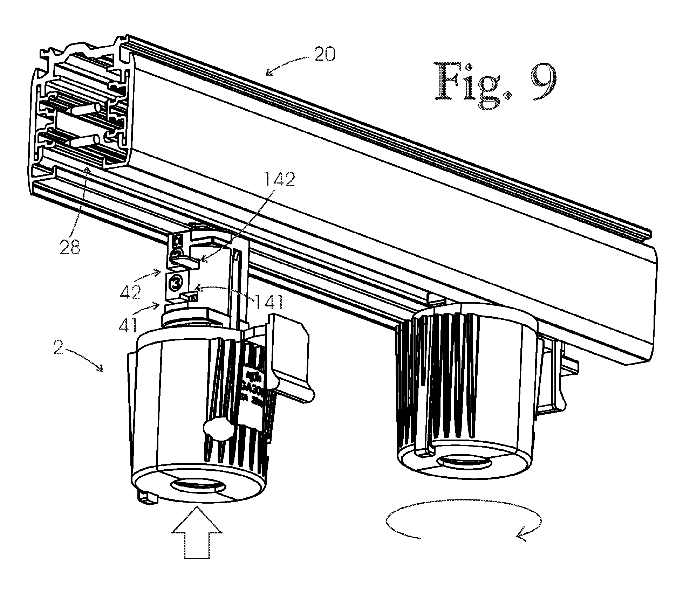

Each location for the phase-contact finger comprises a corresponding locking slot, and thus the proximal location 41 for the phase-contact finger comprises a locking slot 141, the distal location 42 for the phase-contact finger comprises a locking slot 142, and the second distal location 43 for the phase-contact finger comprises a locking slot 143. The locking slot 143 is shown in Figure 2, and the locking slots 141 and 142 are shown in Figure 9. The shape of the locking slot 141 is best shown in Figure 9, since there is no phase-contact finger in the locking slot 141.

Each of the locking slots 141, 142 and 143 is a slot formed in the corresponding location for the phase-contact finger and extending upwards in the axial direction, i.e. towards the ground connector 12. The depth of each locking slot 141, 142 and 143 is selected to allow the locking slot in question to receive the phase-contact finger 4. Each locking slot 141, 142 and 143 is arranged, in cooperation with the helical spring 8, to hold the phase-contact finger 4 in the location in which the user has placed the phase-contact finger 4. The axial, upwards-directed force applied by the helical spring 8 to the phase-contact finger 4 holds the phase-contact finger 4 in its location, because the phase-contact finger 4 received in the locking slot cannot turn about the axial direction of the frame part 2.

Moving the phase-contact finger 4 from its proximal location 41 to its distal location 42 takes place in the following manner. First, the phase-contact finger 4 is pressed downwards so that the phase-contact finger 4 comes out of the locking slot 141. Then, viewed from above, the phase-contact finger 4 is turned 90° clockwise about the axial direction of the frame part 2 until the phase-contact finger 4 reaches a transfer groove 24.

When the phase-contact finger 4 is at the transfer groove 24, the phase-contact finger 4 may be moved along the transfer groove 24 axially to a plane on which the distal location 42 for the phase-contact finger is. Then, viewed from above, the phase-contact finger 4 is turned 90° anticlockwise about the axial direction of the frame part 2 until the phase-contact finger 4 reaches its distal location 42. Pushed by the helical spring 8, the phase-contact finger 4 is moved automatically into the locking slot 142.

Figure 8 shows a conductor track 20 from a longitudinal end. The conductor track 20 comprises a coupling slot 28 and three phase conductors L1, L2 and L3 extending longitudinally in the coupling slot 28. The conductor track 20 also comprises a neutral conductor N extending longitudinally in the coupling slot 28.

The conductor track 20 comprises an upper wall 29, two side walls 26 and two bottom walls 27. Each side wall 26 extends downwards from the corresponding upper wall 29 end in the width direction. Each bottom wall 27 extends inwards from the bottom end of the corresponding side wall 26. The inner ends of the bottom walls 27 are located at a distance from one another, thus providing access to the coupling slot inside the conductor track 20. The inner ends of the bottom walls 27 are bent upwards so that they extend substantially parallel to the side walls 26.

Each phase conductor is mounted in a corresponding conductor groove. The phase conductor L1 is mounted in a conductor groove 21, the phase conductor L2 is mounted in a conductor groove 22, and the phase conductor L3 is mounted in a conductor groove 23. The neutral conductor N is mounted in a conductor groove 24. The phase conductors L2 and L3 are located one upon the other at a distance from one another. There is an insulation neck 25 between the phase conductors L2 and L3. The phase conductor L1 and the neutral conductor N are located one upon the other at a distance from one another. There is an insulation neck 25 between the phase conductor L1 and the neutral conductor N. With respect to the phase conductor L1 and the neutral conductor N, the phase conductors L2 and L3 are on the opposite wall of the coupling slot 28.

The power take-off adapter according to Figure 1 is arranged to be connected electrically and mechanically to the conductor track 20 of Figure 8. When the power take-off adapter is detached from the conductor track 20, the user may move the phase-contact finger 4 between different locations 41, 42 and 43 for the phase-contact finger in order to select that phase conductor to which the phase-contact finger 4 is connected when the power take-off adapter is coupled to the conductor track 20. The phase-contact finger 4 is arranged to be moved manually in such a manner that the user grips the phase-contact finger 4 and moves it from one location for the phase-contact finger to another location for the phase-contact finger. When the phase-contact finger 4 is received in the location 41, the phase-contact finger 4 is arranged to be connected to the phase conductor L3.

When the phase-contact finger 4 is received in the location 42, the phase-contact finger 4 is arranged to be connected to the phase conductor L2. When the phase-contact finger 4 is received in the location 43, the phase-contact finger 4 is arranged to be connected to the phase conductor L1.

Figure 9 shows obliquely from below how the power take-off adapter of Figure 1 is mounted in the conductor track 20. In accordance with Figure 9, the power take-off adapter is connected to the conductor track 20 by first inserting the power take-off adapter in the mounting direction into a connection depth in the coupling slot 28 of the conductor track 20, and then turning the power take-off adapter 90° about the rotation axis, whereupon the power take-off adapter is set to the on-position, in which the phase-contact finger 4 is in conductive connection with the phase conductor L2. When viewed from below, the direction of rotation is clockwise, and the rotation axis is parallel to the mounting direction. When the power take-off adapter is in the on-position, the power take-off adapter is connected electrically and mechanically to the conductor track 20.

When the power take-off adapter is inserted into a connection depth in the coupling slot 28 of the conductor track 20, the power take-off adapter is arranged to be moved in a stepless manner in the longitudinal direction of the conductor track. Thus, the longitudinal location of the power take-off adapter with respect to the conductor track 20 may be selected freely. The power take-off adapter is arranged to be moved longitudinally with respect to the conductor track 20 before the power take-off adapter is turned to the on-position.

It is obvious to a person skilled in the art that the basic idea of the invention may be implemented in many different ways. The invention and its embodiments are thus not restricted to the examples described above, but may vary within the scope of the claims.

## Claims

1. A power take-off adapter for a conductor track, the conductor track (20) comprising a coupling slot (28) and a plurality of phase conductors (L1, L2, L3) extending longitudinally in the coupling slot, the power take-off adapter being arranged to be connected electrically and mechanically to the conductor track (20) and comprising:

   a frame part (2);
   a phase-contact finger (4) arranged to protrude from the frame part (2) to form an electrically conductive connection to a phase conductor (L2) of the conductor track (20);
   a coupling contact (6) arranged to lead current to an electric appliance supplied by the power take-off adapter;
   a connection contact member arranged to lead current from the phase-contact finger (4) to the coupling contact (6) and comprising a helical spring (8), the connection contact member being arranged in such a manner that, in use, the entire load current flowing from the phase-contact finger (4) to the coupling contact (6) flows via the helical spring (8), **characterized in that** the frame part (2) comprises a proximal location (41) for the phase-contact finger and a distal location (42) for the phase-contact finger, both of which are arranged to receive the phase-contact finger (4), the proximal location (41) and the distal location (42) for the phase-contact finger being situated separately from one another in the axial direction of the frame part (2), the phase-contact finger (4) being arranged to be moved between the proximal location (41) for the phase-contact finger and the distal location (42) for the phase-contact finger, the phase-contact finger (4) being in its proximal location (41) when the phase-contact finger (4) is arranged to be connected to a phase conductor (L3) of the conductor track (20), and the phase-contact finger (4) being in its distal location (42) when the phase-contact finger (4) is arranged to be connected to another phase conductor (L2) of the conductor track (20), the helical spring (8) being arranged such that it is able to apply an axial force to the phase-contact finger (4) both when the phase-contact finger is in its proximal location (41) and when it is in its distal location (42), the axial force being arranged to ensure a reliable electrically conductive connection at both axial ends (801, 802) of the helical spring (8).

2. A power take-off adapter as claimed in claim 1, **characterized in that** the end surface of an end turn (81) at the first axial end (801) of the helical spring (8) is levelled to increase the electrically conductive contact surface.

3. A power take-off adapter as claimed in claim 2, **characterized in that** the cross section of the end turn (81) at the first axial end (801) of the helical spring (8) close to the free end in the circumferential direction has a shape of a circular segment.

4. A power take-off adapter as claimed in any one of claims 1 to 3, **characterized in that** a spring turn (82) adjacent to the end turn (81) at the first axial end (801) of the helical spring (8) comprises an overlapping section, which overlaps the end turn (81) in such a manner that, in use, the end surface of the overlapping section is arranged to be on the same plane as the end surface of the end turn (81), whereby the end surface of the overlapping section of the adjacent spring turn (82) is able to act as an electrically conductive contact surface.

5. A power take-off adapter as claimed in claim 4, **characterized in that** the end surface of the overlapping section of the adjacent spring turn (82) is levelled to increase the electrically conductive contact surface.

6. A power take-off adapter as claimed in claim 5, **characterized in that** the cross section of the overlapping section of the adjacent spring turn (82) has a shape of a circular segment.

7. A power take-off adapter as claimed in any one of the preceding claims, **characterized in that** the phase-contact finger (4) is arranged to be moved manually in such a manner that the user grips the phase-contact finger (4) and moves it from one location for the phase-contact finger to another location for the phase-contact finger.

Fig. 1

Fig. 2

Fig. 3

Fig. 4

Fig. 5

801

81

82        83

Fig. 6

81

82

801

8

83

802

Fig. 7

81

Fig. 8

20

29

26

21

L2        L1

22        25        25        26

N        24

23        L3

27        28        27

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 84305